# EUROPÄISCHE PATENTSCHRIFT

(11) **EP 3 146 245 B1**
(45) Veröffentlichungstag und Bekanntmachung des Hinweises auf die Patenterteilung: **08.08.2018**
(21) Anmeldenummer: 14809589.6
(22) Anmeldetag: 20.11.2014
(51) Int. Cl.: F16K 11/044, F16K 31/06

(54) **MEHRWEGEVENTIL**
MULTI-WAY VALVE
VANNE À PLUSIEURS VOIES

(43) Veröffentlichungstag der Anmeldung: 29.03.2017
(73) Patentinhaber: Festo AG & Co. KG, 73734 Esslingen (DE)
(72) Erfinder: RENTZ, Robert, 70327 Stuttgart (DE)
(74) Vertreter: Patentanwälte Magenbauer & Kollegen Partnerschaft mbB
(86) Internationale Anmeldenummer: PCT/EP2014/003094
(87) Internationale Veröffentlichungsnummer: WO 2016/078677

(56) Entgegenhaltungen:
- EP-A1- 0 627 582
- EP-A1- 1 388 696
- EP-A1- 2 019 401
- US-B1- 6 488 050

## Beschreibung

Die Erfindung betrifft ein Mehrwegeventil, mit einem Ventilgehäuse, in dem eine Ventilkammer ausgebildet ist, in der ein Ventilglied unter Ausführung einer Schaltbewegung axial bewegbar angeordnet ist, das über einen eine periphere Außenumfangsfläche aufweisenden Hauptkörper verfügt, der mindestens einen elastisch verformbaren, zwei einander entgegengesetzte axiale Stirnseiten aufweisenden ringförmigen Dichtteller trägt, der mit einem radial innen angeordneten ringförmigen Halteabschnitt in einer nach radial außen zu der peripheren Außenumfangsfläche hin offenen Ringnut des Hauptkörpers gehalten ist und der einen bezüglich der Außenumfangsfläche des Hauptkörpers radial vorstehenden Verschlussabschnitt aufweist, der an wenigstens einer der beiden axialen Stirnseiten eine Dichtfläche bildet, der ein bezüglich des Ventilgehäuses ortsfester ringförmiger Ventilsitz axial gegenüberliegt, der eine zwei Ventilkammerabschnitte verbindende Überströmöffnung umrahmt und an dem der Dichtteller mit der Dichtfläche unter Einnahme einer die Überströmöffnung absperrenden Schließstellung anliegen kann.

Ein aus der DE 20 38 846 A bekanntes Mehrwegeventil dieser Art verfügt über ein Ventilglied mit einem länglichen Hauptkörper, der in einer Ventilkammer einen ringförmigen, aus Material mit gummielastischen Eigenschaften bestehenden Dichtteller trägt. Der Dichtteller hat zwei einander entgegengesetzte axiale Stirnseiten, an denen er mit Dichtflächen versehen ist, die abwechselnd mit am Ventilgehäuse des Mehrwegeventils ausgebildeten ringförmigen Ventilsitzen zusammenwirken. Jeder Ventilsitz umrahmt eine Überströmöffnung, die einen mittleren Ventilkammerabschnitt, in dem sich der Dichtteller befindet, mit jeweils einem von zwei äußeren Ventilkammerabschnitten verbindet, wobei jeder Ventilkammerabschnitt mit einem das Ventilgehäuse durchsetzenden Ventilkanal kommuniziert. Das Ventilglied ist axial bewegbar, um den Dichtteller mit seinen Dichtflächen abwechselnd an die beiden Ventilsitze anzulegen und dadurch die von den Ventilsitzen umrahmten Überströmöffnungen abwechselnd abzusperren oder für einen Fluiddurchtritt freizugeben.

Im Betrieb des bekannten Mehrwegeventils steht der eine der beiden äußeren Ventilkammerabschnitte mit einer ein Druckmedium zur Verfügung stellenden Druckquelle in Verbindung. Je nach Schaltstellung des Ventilgliedes kann das Druckmedium durch die zugeordnete Überströmöffnung hindurch in den mit einem Verbraucher verbundenen mittleren Ventilkammerabschnitt überströmen oder ist, wenn der Dichtteller unter Einnahme einer Schließstellung am zugeordneten Ventilsitz anliegt, an einem solchen Fluidübertritt gehindert. Letzteres ist ein Zustand, bei dem auf den Dichtteller von der Seite der äußeren Ventilkammer her eine hohe fluidische Druckkraft einwirkt, die zur Folge haben kann, dass sich der Dichtteller verformt. Es besteht insbesondere die Möglichkeit, dass der Dichtteller im Bereich seines in einer Ringnut des Hauptkörpers fixierten Halteabschnittes unterströmt wird und dadurch quasi aufgebläht wird. Abgesehen von einer Leckage kann dies auch dazu führen, dass das Material des Dichttellers aufgrund der ständig wechselnden Belastung beschädigt wird.

Einer solchen Problematik kann entgegengewirkt werden, indem Maßnahmen getroffen werden, die den Verschlussabschnitt an der dem Ventilsitz abgewandten Stirnseite mechanisch abstützen. Eine solche Abstützung ist bei einem in der DE 23 27 320 A beschriebenen Ventil realisiert. Damit verbunden ist jedoch eine sich nachteilig auf die Herstellungskosten auswirkende spezielle Formgebung des Hauptkörpers und eine Beeinträchtigung der Montagemöglichkeiten des Dichttellers. Ferner würde bei einer solchen Ausgestaltung nur eine der beiden axialen Stirnseiten des Dichttellers als zur Kooperation mit einem Ventilsitz geeignete Dichtfläche zur Verfügung stehen, was die Variabilität bei der Konstruktion des Mehrwegeventils beeinträchtigen würde. Ein weiteres Mehrwegeventil mit den Merkmalen des Oberbegriffs von Anspruch 1 ist bekannt aus der EP 1 388 696 A1.

Die EP 0 627 582 A1 offenbart eine Dichtungsanordnung mit einem Dichtring, der einen äußeren Dichtbereich mit einer im eingebauten Zustand am abzudichtenden Oberflächenbereich anliegenden Dichtkante und einen innerhalb des Dichtbereiches gelegenen Haltebereich aufweist. Um ein Herausziehen des Dichtringes aus der zugehörigen nutförmigen Ausnehmung zu erschweren bzw. verhindern, weist die nutförmige Ausnehmung zumindest eine rückspringende Halteschulter und der Haltebereich des Dichtringes zumindest eine zugeordnete Haltekante auf, welche im eingebauten Zustand des Dichtringes diesen formschlüssig nach Art eines Widerhakens halten.

Der Erfindung liegt die Aufgabe zugrunde, ein Mehrwegeventil zu schaffen, das bei kostengünstigem Aufbau eine zuverlässige Abdichtung gewährleistet, wenn das Ventilglied eine an einem Ventilsitz anliegende Schließstellung einnimmt.

Zur Lösung dieser Aufgabe ist in Verbindung mit den eingangs genannten Merkmalen vorgesehen, dass der Halteabschnitt des Dichttellers an wenigstens einer am Verschlussabschnitt eine Dichtfläche aufweisenden axialen Stirnseite mit einer konzentrisch angeordneten, elastisch biegbaren ringförmigen Dichtlippe versehen ist, die sich nach radial außen erstreckt und an der axial benachbarten Nutflanke der Ringnut mit Dichtkontakt anliegt.

Auf diese Weise wird verhindert, dass der Dichtteller im Bereich seines in der Ringnut aufgenommenen Halteabschnittes von der Seite der Überströmöffnung her unterströmt wird, wenn er in der betreffenden Schließstellung positioniert ist. Das an der verschlossenen Überströmöffnung anstehende Druckmedium kann zwar die die Dichtfläche aufweisende Stirnseite des Dichttellers beaufschlagen und auch ein Stückweit in die Ringnut eintreten, wird jedoch von der an dem Halteabschnitt ausgebildeten und dichtend mit der Nutflanke der Ringnut in Kontakt stehenden Dichtlippe an einer Weiterströmung gehindert, sodass es nicht in den radial zwischen dem Halteabschnitt und dem Hauptkörper angeordneten Bereich der Ringnut eindringen kann. Dies verhindert wirksam ein Aufblähen des Dichttellers und reduziert auch die sonstigen Verformungen des Dichttellers, was insgesamt die strukturellen Belastungen des Dichttellers und auch die Leckageanfälligkeit sehr stark reduziert.

Da sich die erfindungsgemäßen Maßnahmen auf den in der Ringnut angeordneten Halteabschnitt beschränken, unterliegt der Verschlussabschnitt des Dichttellers keinen Einschränkungen bei seiner Gestaltung und Nutzung. Es besteht somit insbesondere die vorteilhafte Möglichkeit, beide axialen Stirnseiten des Verschlussabschnittes mit einer Dichtfläche auszustatten, die mit einem eine Überströmöffnung umrahmenden Ventilsitz kooperieren kann. In einem solchen Fall ist es vorteilhaft, wenn der Verschlussabschnitt an beiden axialen Stirnseiten mit einer Dichtlippe versehen ist, die mit der jeweils gegenüberliegenden Nutflanke der Ringnut dichtend zusammenarbeiten kann. Die erfindungsgemäße Wirkung stellt sich dann in zwei Schließstellungen des Ventilgliedes ein. Eine beiderseitige Ausbildung von Dichtlippen an dem Dichtteller hat auch den Vorteil, dass bei der Montage des Dichttellers und der Ringnut keine besondere Orientierung erforderlich ist und funktionsbeeinträchtigende Falschmontagen ausgeschlossen werden können.

Ist der Verschlussabschnitt des Dichttellers an nur einer axialen Stirnseite mit einer Dichtfläche ausgestattet, genügt es prinzipiell, eine Dichtlippe nur an dieser Stirnseite am Halteabschnitt vorzusehen. Auch wenn ein Dichtteller zum Zusammenwirken mit zwei Ventilsitzen genutzt wird, kann sich die Ausstattung mit einer Dichtlippe auf eine Stirnseite des Dichttellers beschränken, wenn der Dichtteller in einer der beiden möglichen Schließstellungen von der Seite der dann wirksamen Dichtfläche her nicht mit einem Überdruck beaufschlagt ist. Grundsätzlich ist es aber vorteilhaft, wenn der Dichtteller unabhängig von der Anzahl der Dichtflächen und seinen Einsatzbedingungen an beiden axialen Stirnseiten des Halteabschnittes mit einer erfindungsgemäßen Dichtlippe ausgestattet ist.

Da sich die Dichtlippe nach radial außen erstreckt, wobei sie im Querschnitt des Dichttellers gesehen insbesondere eine schräge Ausrichtung hat, wird die Abdichtwirkung durch den Fluiddruck des zurückzuhaltenden Druckmediums verstärkt. Es ergibt sich mithin eine Druckabhängigkeit in der Abdichtkraft. Das Druckmedium wirkt von radial außen her auf die Dichtlippe ein und drückt sie vom freien Ende her von dem Dichtteller weg und mit hoher Kraft gegen die benachbarte Nutflanke des Hauptkörpers des Ventilgliedes.

Vorteilhafte Weiterbildungen der Erfindung gehen aus den Unteransprüchen hervor.

Ein zweckmäßiger Aufbau des Mehrwegeventils sieht vor, dass von den beiden auf entgegengesetzten Seiten der Überströmöffnungen liegenden Ventilkammerabschnitten der auf der Seite des Dichttellers liegende Ventilkammerabschnitt mit einem mit einem Verbraucher verbindbaren Arbeitskanal des Mehrwegeventils kommuniziert, während der auf der axial entgegengesetzten Seite liegende Ventilkammerabschnitt mit einem mit einer externen Druckquelle verbindbaren Speisekanal des Mehrwegeventils kommuniziert. Eine solche Ausgestaltung ermöglicht insbesondere die Nutzung des Mehrwegeventils als 2/2-Wegeventil, mit dessen Hilfe eine Fluidverbindung zwischen einer Druckquelle und einem an einen Arbeitskanal angeschlossenen Verbraucher wahlweise freigegeben oder abgesperrt werden kann.

Als besonders vorteilhaft erweist sich die erfindungsgemäße Ausgestaltung in Verbindung mit einem Mehrwegeventil, bei dem - wie weiter oben schon erwähnt - der Dichtteller axial beweglich zwischen zwei ihm jeweils axial zugewandten ringförmigen Ventilsitzen angeordnet ist. Jeder dieser dem Ventilgehäuse zugeordneten Ventilsitze umrahmt eine Überströmöffnung, die einen mittleren Ventilkammerabschnitt der Ventilkammer mit einem von zwei äußeren Ventilkammerabschnitten verbindet. Der mittlere Ventilkammerabschnitt ist also quasi in axialer Richtung auf einander entgegengesetzten Seiten von zwei äußeren Ventilkammerabschnitten flankiert, die jeweils über eine von einem Ventilsitz umrahmte Überströmöffnung hindurch mit dem mittleren Ventilkammerabschnitt verbunden sind. Der Dichtteller kann im Rahmen der Schaltbewegung des Ventilgliedes abwechselnd in einer am einen Ventilsitz anliegenden Schließstellung oder in einer am anderen Ventilsitz anliegenden Schließstellung positioniert werden, sodass er die jeweils zugeordnete Überströmöffnung absperrt. Gleichzeitig ist er dabei vom jeweils anderen Ventilsitz abgehoben und gibt die diesem anderen Ventilsitz zugeordnete Überströmöffnung für einen Fluiddurchtritt frei.

Eine solche Ausgestaltung eignet sich vorteilhaft für eine Anwendung, bei der der mittlere Ventilkammerabschnitt mit einem zu einem Verbraucher führenden Arbeitskanal des Mehrwegeventils kommuniziert, während einer der beiden äußeren Ventilkammerabschnitte mit einem mit einer Druckquelle verbindbaren Speisekanal und der andere äußere Ventilkammerabschnitt mit einem mit einer Drucksenke verbundenen Entlastungskanal kommuniziert. Bevorzugt wird das Mehrwegeventil mit Druckluft als Druckmedium betrieben, sodass die Druckquelle eine Druckluftquelle ist und der Entlastungskanal einen Entlüftungskanal bildet, der mit der Atmosphäre als Drucksenke kommuniziert. Ein solches Mehrwegeventil lässt sich vorteilhaft als 3/2-Wegeventil betreiben oder - sofern entsprechende weitere Anschlüsse vorhanden sind - als 4/2-Wegeventil oder als 5/2-Wegeventil. Bei den beiden letztgenannten Ausführungsformen ist das Ventilglied zweckmäßigerweise mit mehreren axial beabstandet zueinander angeordneten und jeweils in einer Haltenut fixierten Dichttellern ausgestattet, von denen wenigstens einer und zweckmäßigerweise jeder im Bereich des Halteabschnittes mit einer erfindungsgemäßen Dichtlippe ausgestattet ist.

Der Dichtteller verfügt zweckmäßigerweise über eine Längsachse, bezüglich derer er konzentrisch angeordnet ist. Jede Dichtlippe ist zweckmäßigerweise ebenfalls konzentrisch zu dieser Längsachse ausgerichtet und hat zweckmäßigerweise eine dahingehende Formgebung, dass sie sich zu ihrem freien Ende hin konisch erweitert.

Jede Dichtlippe ist zweckmäßigerweise ein einstückiger Bestandteil des Halteabschnittes. Vorzugsweise ist der gesamte Dichtteller einstückig ausgebildet und besteht insbesondere aus einem Elastomermaterial. Zur Montage in der Ringnut kann der Dichtteller in die Ringnut eingeschnappt werden, zu welchem Zweck er vorübergehend elastisch aufweitbar ist. Dies bietet auch die vorteilhafte Möglichkeit, den Hauptkörper zumindest in dem die Ringnut bildenden Abschnitt einstückig auszubilden. Es bedarf keiner Trennstelle im Bereich der Ringnut, um eine Mehrteiligkeit des Hauptkörpers herbeizuführen, damit der Dichtteller bequem eingesetzt werden kann.

Vorzugsweise verfügt der Halteabschnitt des Dichttellers über einen einstückig mit dem Verschlussabschnitt ausgebildeten Basisabschnitt, der seitlich die mindestens eine Dichtlippe trägt, die ihrerseits einstückig mit dem Basisabschnitt ausgebildet ist.

Vorzugsweise ist die mindestens eine Dichtlippe so gestaltet, dass sie im noch nicht in der Ringnut montierten Zustand des Dichttellers mit relativ steiler Ausrichtung kragenartig von dem Basisabschnitt wegragt. Erst im Zuge der Montage in der Ringnut wird die Dichtlippe dann so in die radiale Richtung des Dichttellers verformt, dass sie unter Vorspannung an der benachbarten Nutflanke der Ringnut anliegt.

Vorzugsweise ist der Basisabschnitt an der mit einer Dichtlippe versehenen axialen Stirnseite mit einer sich konzentrisch um die Dichtlippe herum erstreckenden ringförmigen Aufnahmevertiefung versehen. In diese Aufnahmevertiefung kann die Dichtlippe bei entsprechender Verformung hineingebogen werden. Ein Vorteil der Aufnahmevertiefung besteht auch darin, dass der Basisabschnitt in der axialen Richtung des Dichttellers mit einer Breite ausgeführt werden kann, die zumindest annähernd der Breite der Ringnut entspricht, sodass sich der Dichtteller mit seinem Basisabschnitt an den beiden Nutflanken der Ringnut abstützen kann, ohne die Funktionsfähigkeit der Dichtlippen und deren Beaufschlagbarkeit durch das Druckmedium zu beeinträchtigen.

Als besonders zweckmäßig hat es sich erwiesen, wenn die Breite des Basisabschnittes etwas geringer ist als die Breite der Ringnut, sodass der Basisabschnitt leicht spielbehaftet in der Ringnut aufgenommen ist, wobei der Basisabschnitt zweckmäßigerweise 1/100 mm bis 5/100 mm schmäler ist als die Ringnut.

Für den Dichtteller empfiehlt sich im Querschnitt betrachtet und unter Vernachlässigung der mindestens einen Dichtlippe eine blockförmige Gestalt, insbesondere eine im Wesentlichen rechteckige und bevorzugt quadratische Querschnittsprofilierung.

Bei dem Mehrwegeventil handelt es sich vorzugsweise um ein Ventil, das zur Steuerung eines gasförmigen Druckmediums und insbesondere zur Steuerung von Druckluft eingesetzt wird. Es eignet sich aber gleichermaßen zur Steuerung von Flüssigkeiten.

Das Mehrwegeventil ist zweckmäßigerweise von elektrisch betätigbarer Bauart. Hierzu enthält es eine elektrisch betätigbare Antriebseinrichtung zum Hervorrufen der Schaltbewegung des Ventilgliedes. Bei einer möglichen Ausführungsform wirkt diese elektrisch betätigbare Antriebseinrichtung direkt auf das Ventilglied ein. Bevorzugt wird allerdings eine elektro-fluidisch und insbesondere eine elektro-pneumatisch vorgesteuerte Ausführungsform, bei der die elektrisch betätigbare Antriebseinrichtung eine elektrisch betätigbare Vorsteuerventileinrichtung ist, beispielsweise eine Magnetventileinrichtung oder eine Piezoventileinrichtung. Durch die Vorsteuerventileinrichtung kann die Fluidbeaufschlagung des Ventilgliedes mittels eines Antriebsfluides gesteuert werden, um die Schaltbewegung des Ventilgliedes durch Fluidbeaufschlagung hervorzurufen.

Wie schon angedeutet wurde, kann das Ventilglied des Mehrwegeventils je nach Ausgestaltung und Funktionalität mit nur einem Dichtteller oder mit mehreren Dichttellern bestückt sein. Ist das Ventilglied mit mehreren Dichttellern bestückt, kann eine beliebige Anzahl der vorhandenen Dichtteller an einer oder an beiden Stirnseiten mit einer zur Abdichtung gegenüber der zugeordneten Ringnut dienenden Dichtlippe versehen sein.

Nachfolgend wird die Erfindung anhand der beiliegenden Zeichnung näher erläutert. In dieser zeigen:
- Figur 1: eine bevorzugte Ausführungsform des erfindungsgemäßen Mehrwegeventils in einem Längsschnitt, wobei das Ventilglied eine erste Schaltstellung einnimmt, die beim Ausführungsbeispiel eine Grundstellung ist,
- Figur 2: das in Figur 1 illustrierte Mehrwegeventil in einer zweiten Schaltstellung des Ventilgliedes, wobei ein umrahmter Ausschnitt separat nochmals vergrößert illustriert ist,

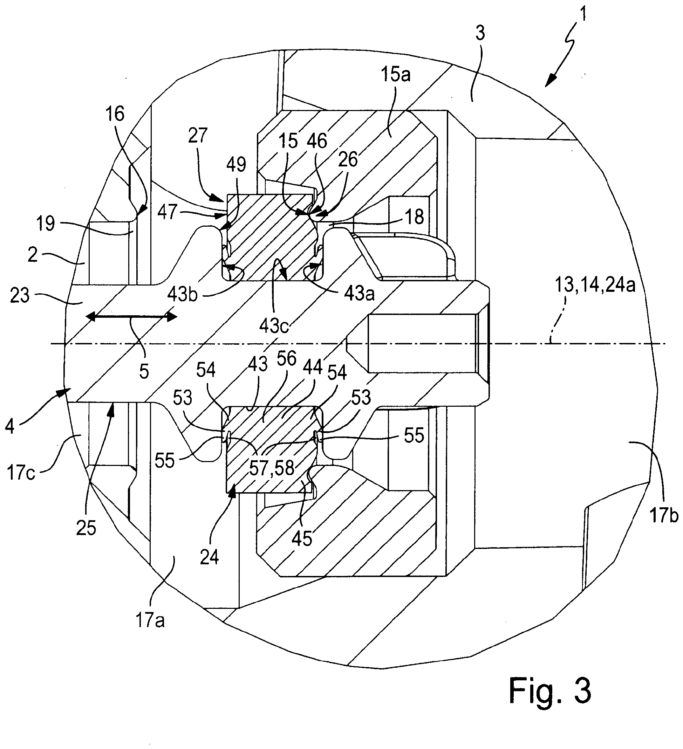

- Figur 3: den in Figur 2 umrahmten Ausschnitt III in einer vergrößerten Darstellung,
- Figur 4: eine isometrische Einzeldarstellung des bei dem Mehrwegeventil eingebauten Dichttellers, und
- Figur 5: einen Querschnitt des Dichttellers in einer Einzeldarstellung vor dem Einbau, wobei die Schnittebene in einer axialen und radialen Richtung ausgerichtet ist.

Das in seiner Gesamtheit mit Bezugsziffer 1 bezeichnete Mehrwegeventil enthält ein in einer Ventilkammer 2 eines Ventilgehäuses 3 linear bewegbar angeordnetes Ventilglied 4. Die mögliche Bewegung des Ventilgliedes 4 sei im Folgenden auch als Schaltbewegung 5 bezeichnet und ist in der Zeichnung durch einen Doppelpfeil illustriert.

Zur Erzeugung der Schaltbewegung 5 ist das Mehrwegeventil 1 mit einer Antriebseinrichtung 6 ausgestattet, die bevorzugt vom elektrisch betätigbaren Typ ist. Elektrische Kontaktmittel 7 der Antriebseinrichtung 6 erlauben die Zufuhr elektrischer Betätigungssignale zur bedarfsgemäßen Betätigung der Antriebseinrichtung 6, die dann wiederum das Ventilglied 4 entsprechend positioniert.

Das Mehrwegeventil 1 ist zweckmäßigerweise von elektro-fluidisch vorgesteuerter Bauart. In diesem Zusammenhang ist das Ventilglied 4 Bestandteil eines fluidisch betätigbaren Hauptventils 8 des Mehrwegeventils 1, während die Antriebseinrichtung 6 als eine mit dem Hauptventil 8 zu einer Baugruppe zusammengefasste, elektrisch betätigbare Vorsteuerventileinrichtung 12 ausgeführt ist. Letztere ist in der Lage, eine durch ein Antriebsfluid verursachte Fluidbeaufschlagung des zu dem Hauptventil 8 gehörenden Ventilgliedes 4 zu steuern, um eine durch Fluidkraft hervorgerufene Schaltbewegung 5 des Ventilgliedes 4 zu bewirken.

Die Ventilkammer 2 hat eine längliche Gestalt mit einer Längsachse 13. Das zumindest partiell und bevorzugt in seiner Gesamtheit in dieser Ventilkammer 2 angeordnete Ventilglied 4 hat eine mit der Längsachse 13 der Ventilkammer 2 zusammenfallende Längsachse 14 und hat insbesondere auch eine längliche Gestalt. Die Längsrichtungen der beiden Längsachsen 13, 14 seien im Folgenden auch als axiale Richtungen bezeichnet.

In der Ventilkammer 2 befinden sich zwei mit der Längsachse 13 konzentrische erste und zweite ringförmige Ventilsitze 15, 16. Diese beiden Ventilsitze 15, 16 sind in der axialen Richtung beabstandet zueinander angeordnet, wobei sie einander zugewandt sind. Durch diese beiden ringförmigen Ventilsitze 15, 16 wird die Ventilkammer 2 in drei axial aufeinanderfolgende Ventilkammerabschnitte unterteilt, und zwar in einen zwischen den beiden ringförmigen Ventilsitzen 15, 16 liegenden mittleren Ventilkammerabschnitt 17a und zwei äußere Ventilkammerabschnitte 17b, 17c, die im Folgenden zur besseren Unterscheidung auch als erster äußerer Ventilkammerabschnitt 17b und als zweiter äußerer Ventilkammerabschnitt 17c bezeichnet werden. Der erste Ventilsitz 15 liegt zwischen dem mittleren Ventilkammerabschnitt 17a und dem ersten äußeren Ventilkammerabschnitt 17b. Der zweite Ventilsitz 16 liegt zwischen dem mittleren Ventilkammerabschnitt 17a und dem zweiten äußeren Ventilkammerabschnitt 17c.

Während der erste ringförmige Ventilsitz 15 eine erste Überströmöffnung 18 umrahmt, die den mittleren Ventilkammerabschnitt 17a mit dem ersten äußeren Ventilkammerabschnitt 17b verbindet, umrahmt der zweite ringförmige Ventilsitz 16 eine zweite Überströmöffnung 19, die den mittleren Ventilkammerabschnitt 17a mit dem zweiten äußeren Ventilkammerabschnitt 17c verbindet.

In jeden der drei Ventilkammerabschnitte 17a, 17b, 17c mündet einer von drei Ventilkanälen 22, die das Ventilgehäuse 3 durchsetzen und die andernends jeweils zu einer Außenfläche des Ventilgehäuses 3 ausmünden. Der in den ersten äußeren Ventilkammerabschnitt 17b einmündende Ventilkanal 22 ist beim Ausführungsbeispiel ein Speisekanal 22a, der im Betrieb des Mehrwegeventils 1 mit einer nicht weiter abgebildeten externen Druckquelle verbunden ist, insbesondere mit einer Druckluftquelle. Der in den mittleren Ventilkammerabschnitt 17a einmündende Ventilkanal 22 ist ein Arbeitskanal 22b, der ausgebildet ist, um im Betrieb des Mehrwegeventils 1 mit einem zu betätigenden Verbraucher verbunden zu werden, beispielsweise mit einem fluidbetätigten Antrieb. Sowohl der Speisekanal 22a als auch der Arbeitskanal 22b münden mit einer Anschlussöffnung an der Außenfläche des Ventilgehäuses 3 aus, der Befestigungsmittel zugeordnet sind, um eine zur Druckquelle beziehungsweise zum Verbraucher führende Fluidleitung insbesondere lösbar anschließen zu können.

Der mit dem zweiten äußeren Ventilkammerabschnitt 17c verbundene Ventilkanal 22 ist ein ständig mit einer Drucksenke und dabei insbesondere mit der Atmosphäre verbundener Entlastungskanal 22c, der als Entlüftungskanal bezeichnet werden kann, wenn es sich bei dem durch das Mehrwegeventil zu steuernden Druckmedium um Druckluft handelt, was auf das Ausführungsbeispiel zutrifft.

Der Entlastungskanal 22c kann über eine zur Außenfläche des Ventilgehäuses 3 offene Ausmündung direkt mit der Atmosphäre kommunizieren. Er kann dort auch mit Befestigungsmitteln ausgestattet sein, die beispielsweise das Anschließen eines Schalldämpfers ermöglichen.

Das Ventilglied 4 hat einen länglichen, sich in der Achsrichtung der Längsachse 14 erstreckenden Hauptkörper 23. Der Hauptkörper 23 besteht beispielsweise aus einem starren Kunststoffmaterial oder aus Metall. Der Hauptkörper 23 erstreckt sich auch in dem mittleren Ventilkammerabschnitt 17a, wo er ein ebenfalls zum Ventilglied 4 gehörendes, als Dichtteller 24 bezeichnetes ringförmiges Dichtelement trägt. Der Dichtteller 24 ist vorzugsweise einstückig ausgebildet und besteht aus einem relativ harten, gleichwohl elastisch verformbaren Material, insbesondere aus einem Elastomermaterial. Der Dichtteller 24 ist dafür vorgesehen, abhängig von der Schaltstellung des Ventilgliedes 4 dichtend mit entweder dem einen oder dem anderen der beiden Ventilsitze 15, 16 axial zusammenzuwirken, um wahlweise die eine oder die andere der beiden Überströmöffnungen 18, 19 fluiddicht zu verschließen und gleichzeitig die jeweils andere Überströmöffnung 19, 18 für einen Fluiddurchtritt freizugeben.

Der Hauptkörper 23 hat eine radial nach außen orientierte periphere Außenumfangsfläche 25. Selbige kann, wie dies beim Ausführungsbeispiel der Fall ist, in der axialen Richtung des Ventilgliedes 4 einen abgestuften Verlauf haben.

Der Dichtteller 24 ist an dem sich in dem mittleren Ventilkammerabschnitt 17a erstreckenden Längenabschnitt des Hauptkörpers 23 fixiert. Auf diese Weise bilden der Hauptkörper 23 und der Dichtteller 24 eine Bewegungseinheit und führen die Schaltbewegung 5 einheitlich stets gemeinsam aus.

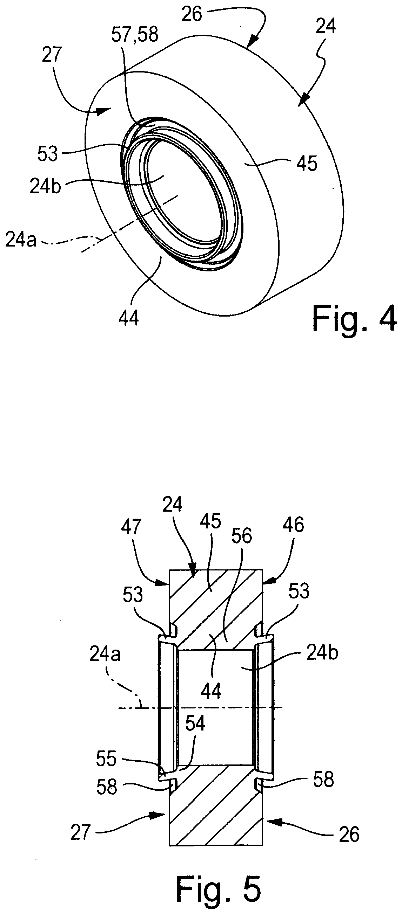

Der in den Figuren 4 und 5 einzeln isoliert abgebildete Dichtteller 24 ist ein ringförmiges Element, das eine Längsachse 24a aufweist. Der Dichtteller 24 ist konzentrisch zu dieser Längsachse 24a angeordnet und umschließt eine zentrale Durchbrechung 24b, die zu jeweils einer von zwei einander entgegengesetzt orientierten axialen Stirnseiten 26, 27 ausmündet, die im Folgenden zur besseren Unterscheidung auch als erste axiale Stirnseite 26 und als zweite axiale Stirnseite 27 bezeichnet werden.

Der ringförmige Dichtteller 24 sitzt koaxial auf dem Hauptkörper 23. Genauer gesagt verfügt der Hauptkörper 23 an seinem Außenumfang über eine nach radial außen hin offene, bezüglich der Längsachse 14 konzentrische Ringnut 43, in die der Dichtteller 24 konzentrisch eingesetzt ist. Dabei ist ein radial innen liegender, die zentrale Durchbrechung 24b umschließender ringförmiger Abschnitt des Dichttellers 24, der als Halteabschnitt 44 bezeichnet sei, in der Ringnut 43 aufgenommen. Ein weiterer ringförmiger Abschnitt des Dichttellers 24, der als Verschlussabschnitt 45 bezeichnet sei, umschließt den Halteabschnitt 44 radial außen und ragt rings um den Hauptkörper 23 herum radial aus der Ringnut 43 heraus. Der Halteabschnitt 44 und der Verschlussabschnitt 45 gehen einstückig ineinander über.

Die an der ersten axialen Stirnseite 26 angeordnete Stirnfläche des Verschlussabschnittes 45 bildet eine ringförmige erste Dichtfläche 46. Sie liegt dem ersten Ventilsitz 15 axial gegenüber. Die an der zweiten axialen Stirnseite 27 befindliche Stirnfläche des Verschlussabschnittes 45 bildet eine ringförmige zweite Dichtfläche 47, die dem zweiten Ventilsitz 16 gegenüberliegt. Die in der Achsrichtung der Längsachse 24a gemessene Breite des Verschlussabschnittes 25 ist kleiner als der Abstand zwischen den beiden Ventilsitzen 15, 16, sodass der Dichtteller 24 mit seinem Verschlussabschnitt 45 alternativ an die erste Dichtfläche 46 oder an die zweite Dichtfläche 47 andrückbar ist.

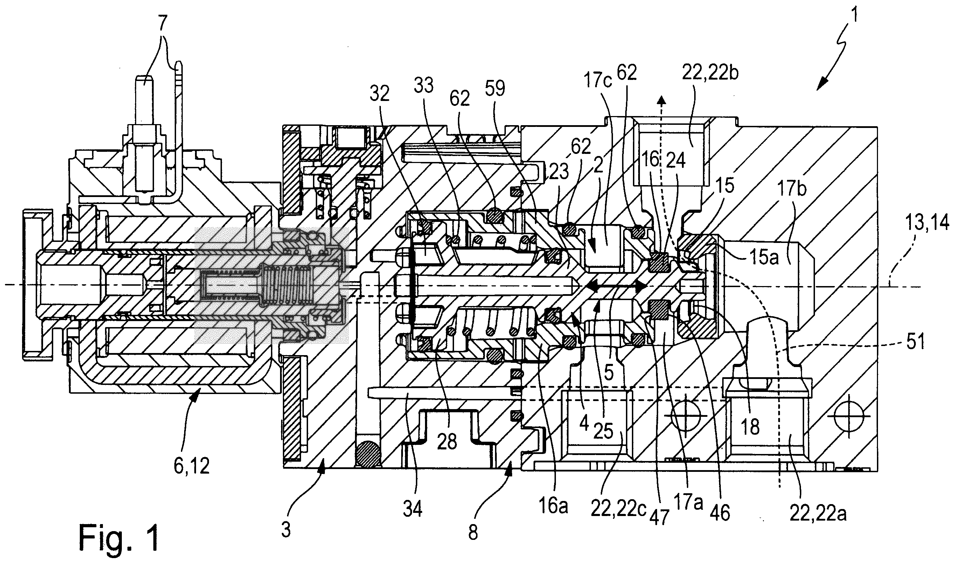

Im Rahmen der Schaltbewegung 5 kann das Ventilglied 4 eine aus Figur 1 ersichtliche erste Schaltstellung einnehmen, in der der Dichtteller 24 mit der zweiten Dichtfläche 47 des Verschlussabschnittes 45 unter Abdichtung an dem bezüglich des Ventilgehäuses 3 ortsfesten zweiten ringförmigen Ventilsitz 16 anliegt. Auf diese Weise ist die zweite Überströmöffnung 19 verschlossen und es besteht durch die freigegebene zweite Überströmöffnung 19 hindurch eine offene Fluidverbindung zwischen dem ersten äußeren Ventilkammerabschnitt 17b und dem mittleren Ventilkammerabschnitt 17a, sodass in den Speisekanal 22a eingespeistes Druckmedium gemäß Strömungspfeil 51 in den Arbeitskanal 22b überströmen kann.

Vorzugsweise handelt es sich bei der in Figur 1 illustrierten ersten Schaltstellung um eine Grundstellung des Ventilgliedes 4, die durch eine Rückstellfedereinrichtung 33 vorgegeben ist, welche sich axial zwischen dem Ventilglied 4 und dem Ventilgehäuse 3 abstützt, wobei sie bevorzugt koaxial auf dem Ventilglied 4 angeordnet ist.

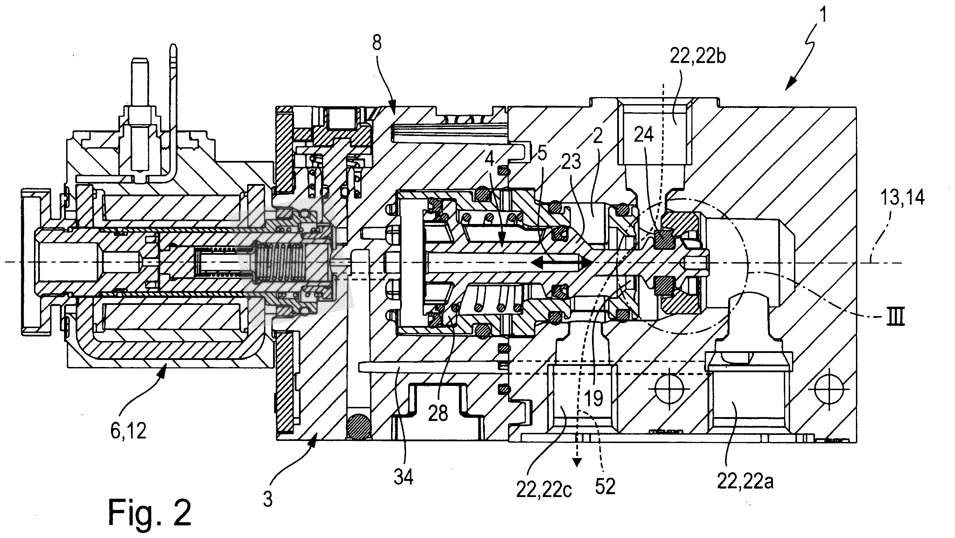

Ausgehend von der in Figur 1 illustrierten ersten Schaltstellung kann das Ventilglied 4 einschließlich des Dichttellers 24 im Rahmen der Schaltbewegung 5 in eine aus Figur 2 ersichtliche zweite Schaltstellung bewegt werden, in der der Dichtteller 24 von dem zweiten Ventilsitz 16 abgehoben ist und mit seiner ersten Dichtfläche 46 dichtend am ersten ringförmigen Ventilsitz 15 anliegt. In dieser bezüglich des ersten Ventilsitzes 15 eingenommenen Schließstellung des Dichttellers 24 ist die erste Überströmöffnung 18 abgesperrt und stattdessen die zweite Überströmöffnung 19 offen. Folglich ist der Speisekanal 22a vom Arbeitskanal 22b abgetrennt und über den Arbeitskanal 22b in das Mehrwegeventil 1 einströmendes Druckmedium kann gemäß Strömungspfeil 52 durch die offene zweite Überströmöffnung 19 hindurch zum Entlüftungskanal 22c überströmen.

Basierend auf dem bisher geschilderten Aufbau des Mehrwegeventils 1 kann das Mehrwegeventil 1 als ein 3/2-Wegeventil genutzt werden, das den Arbeitskanal 22b in der ersten Schaltstellung vom Entlüftungskanal 22c abtrennt und mit dem Speisekanal 22a verbindet und das den Arbeitskanal 22b in der zweiten Schaltstellung vom Speisekanal 22a abtrennt und gleichzeitig mit dem Entlastungskanal beziehungsweise Entlüftungskanal 22c verbindet. Auf diese Weise kann ein an den Arbeitskanal 22b angeschlossener Verbraucher wahlweise mit Druckmedium aus dem Speisekanal 22a versorgt werden oder aber zu dem Entlastungskanal 22c hin druckmäßig entlastet werden.

Bei einem nicht illustrierten Aufbau ist das Mehrwegeventil 1 als 2/2-Wegeventil konzipiert, das lediglich als ein Absperrventil fungiert. In diesem Fall fehlen der zweite Ventilsitz 16 und der Entlastungskanal 22c. Hier fungiert dann der Dichtteller 24 als Absperrglied, das einen an den Arbeitskanal 22b angeschlossenen Verbraucher alternativ mit dem Speisekanal 22a verbinden oder von dem Speisekanal 22a abtrennen kann.

Die zum Hervorrufen der Schaltbewegung 5 erforderliche Antriebskraft wird bei dem Ventilglied 4 beim Ausführungsbeispiel durch die Fluidbeaufschlagung eines zum Ventilglied 4 gehörenden Antriebskolbens 28 hervorgerufen. Dieser Antriebskolben 28 ist exemplarisch von einem axialen Endabschnitt des Hauptkörpers 23 gebildet, kann aber prinzipiell auch ein bezüglich des Hauptkörpers 23 gesonderter Bestandteil des Ventilgliedes 4 sein. Anstelle des Antriebskolbens 28 kann auch eine Antriebsmembran vorgesehen sein.

Der Antriebskolben 28 begrenzt in der Ventilkammer 2 eine Antriebskammer 32, die mittels der Vorsteuerventileinrichtung 12 wahlweise mit einem Antriebsfluid beaufschlagbar oder druckmäßig entlastbar ist. Dies geschieht in der bei Vorsteuerventileinrichtungen 12 üblichen Weise, sodass an dieser Stelle auf diesbezügliche detaillierte Erläuterungen verzichtet wird. Das Antriebsfluid wird beispielsweise über einen im Ventilgehäuse 3 ausgebildeten Zweigkanal 34 aus dem Speisekanal 22a abgezweigt.

Das Antriebsfluid hat einen ausreichend hohen Druck, um in Verbindung mit der Fläche des Antriebskolbens 28 eine Betätigungskraft hervorzurufen, die ausreichend groß ist, um das Ventilglied 4 unter Überwindung der Federkraft der Rückstellfedereinrichtung 33 aus der ersten Schaltstellung in die zweite Schaltstellung umzuschalten.

Die Vorsteuerventileinrichtung 12 ist zweckmäßigerweise eine Magnetventileinrichtung oder eine Piezoventileinrichtung.

Insbesondere in der zweiten Schaltstellung des Ventilgliedes 4 ist der Dichtteller 24 beim Ausführungsbeispiel einer sehr hohen axialen fluidischen Druckdifferenz ausgesetzt. Selbige resultiert aus dem hohen Überdruck im ersten äußeren Ventilkammerabschnitt 17b und aus dem Umstand, dass der mittlere Ventilkammerabschnitt 17a über die offene zweite Überströmöffnung 19 hinweg druckmäßig entlastet ist. Diese hohe Druckdifferenz hat üblicherweise zur Folge, dass das an der der ersten Überströmöffnung 18 zugewandten ersten axialen Stirnseite 26 des Dichttellers 24 anstehende Druckmedium in die Ringnut 43 eindringt und den Halteabschnitt 44 unterwandert, sodass der gesamte Dichtteller 24 radial aufgebläht oder aufgeblasen wird. Dies geschieht bei jedem Schaltstellungswechsel des Ventilgliedes 4 und tritt folglich periodisch auf. Die Folge ist eine hohe Beanspruchung der Struktur des Dichttellers 24, dessen Material dabei Risse bekommen kann, sodass die Funktionsfähigkeit des Dichttellers 24 nach längerer Betriebsdauer nicht mehr gewährleistet ist. Bei konventionellen Mehrwegeventilen ist daher ein häufiger Austausch des Dichttellers 24 erforderlich.

Erfindungsgemäß ist das Mehrwegeventil 1 mit Maßnahmen versehen, die die geschilderte Unzulänglichkeit vermeiden. Diese Maßnahmen bestehen in der Ausbildung einer ringförmigen Dichtlippe 53 am Verschlussabschnitt 45 an zumindest derjenigen axialen Stirnseite 26 und/oder 27, an der der Verschlussabschnitt 45 eine Dichtfläche 46 oder 47 aufweist, die in der Schließstellung gegen eine hohe Druckdifferenz abdichten muss. Exemplarisch ist daher eine solche Dichtlippe 53 wenigstens an der dem ersten Ventilsitz 15 zugewandten ersten axialen Stirnseite 26 des Verschlussabschnittes 45 ausgebildet.

Es sprechen allerdings zahlreiche Gründe dafür, an dem Verschlussabschnitt 45 an beiden axialen Stirnseiten 26, 27 jeweils eine solche Dichtlippe 53 vorzusehen, zumindest wenn der Verschlussabschnitt 45 an beiden axialen Stirnseiten 26, 27 über eine Dichtfläche 46, 47 verfügt. Die Dichtlippe 53 entfaltet auch dann eine vorteilhafte Wirkung, wenn die abzudichtende Druckdifferenz nicht sehr hoch ist. Außerdem erleichtert eine symmetrische Anordnung zweier Dichtlippen 53 an entgegengesetzten Stirnseiten 26, 27 eine fehlerfreie Montage des Dichttellers 24 und erlaubt es einem Nutzer des Mehrwegeventils 1, die vorhandenen Ventilkanäle 22 variabel zu nutzen und beispielsweise den Speisekanal 22a und den Entlüftungskanal 22c funktionell zu vertauschen.

Die weitere Erläuterung orientiert sich daher an einem Dichtteller 24, dessen Verschlussabschnitt 45 an beiden axialen Stirnseiten 26, 27 mit einer Dichtlippe 53 ausgestattet ist, wobei jedoch ausdrücklich betont wird, dass eine solche Dichtlippe 53 auch nur an einer Stirnseite des Dichttellers 24 ausgebildet sein kann.

Die Ringnut 43 ist axial von zwei sich mit Abstand gegenüberliegenden ringförmigen ersten und zweiten Nutflanken 43a, 43b begrenzt und verfügt außerdem über eine nach radial außen weisende, bevorzugt zylindrische Nutgrundfläche 43c. Der Durchmesser der zentralen Durchbrechung 24b des Dichttellers 24 ist zweckmäßigerweise geringfügig kleiner als der Außendurchmesser des Hauptkörpers 23 im Bereich der Nutgrundfläche 43c, sodass der Dichtteller 24 mit einer zumindest geringen radialen Vorspannung in der Ringnut 43 sitzt. Die Elastizität des Materials des Dichttellers 24 erlaubt es, den Dichtteller 24 bei seiner Montage unter kurzzeitiger radialer Aufweitung auf den Hauptkörper 23 aufzuschieben und in die Ringnut 43 einschnappen zu lassen. Auf diese Weise kann der Hauptkörper 23, was auf das Ausführungsbeispiel zutrifft, zumindest in dem die Ringnut 43 aufweisenden Längenabschnitt einstückig ausgebildet sein. Man kann auf eine Zweiteilung mit anschließendem Zusammenfügen zweier Hauptkörperteile 23 vorteilhaft verzichten.

Jede Dichtlippe 53 ist ein einstückiger Bestandteil des Halteabschnittes 44. Außerdem ist jede Dichtlippe 53 ringförmig ausgebildet und koaxial zu der Längsachse 24a an der betreffenden axialen Stirnseite 26, 27 des Dichttellers 24 angeordnet.

Jede Dichtlippe 53 hat einen ringförmigen Fußabschnitt 54, über den sie einstückig an einem zu der Längsachse 24a konzentrischen Basisabschnitt 56 des Halteabschnittes 44 verbunden ist, und zwar im Bereich einer der axialen Stirnseiten 26, 27. Jede Dichtlippe 53 hat einen dem Fußabschnitt 54 entgegengesetzten freien Endabschnitt 57, der ebenfalls ringförmig ausgebildet ist.

Im montierten Zustand des Dichttellers 24 liegt jede Dichtlippe 53 axial zwischen dem Basisabschnitt 56 des Halteabschnittes 44 und der unmittelbar benachbarten, dem Dichtteller 24 zugewandten ersten oder zweiten Nutflanke 43a, 43b.

Der Durchmesser der Dichtlippe 53 ist im Bereich des Fußabschnittes 54 kleiner als im Bereich des freien Endabschnittes 55. Auf diese Weise erstreckt sich die Dichtlippe 53 ausgehend vom Basisabschnitt 56 ringsum radial nach außen, in Richtung zur Nutöffnung 49 der Ringnut 43. Mit ihrem freien Endabschnitt 55 liegt die Dichtlippe 53 an der zugewandten Nutflanke 43a oder 43b in einem kreisförmigen Dichtkontaktbereich an, wobei zwischen der Dichtlippe 53 und dem Basisabschnitt 56 zweckmäßigerweise ein zur Nutöffnung 48 hin offener schlitzförmiger Zwischenraum 57 verbleibt.

Ein stirnseitig auf den Verschlussabschnitt 45 einwirkendes Druckmedium kann axial zwischen dem Dichtteller 24 und der benachbarten ersten oder zweiten Nutflanke 43a, 43b radial in die Ringnut 43 eindringen und in den schlitzförmigen Zwischenraum 57 eintreten, sodass die gummielastische Dichtlippe 53 axial vom Basisabschnitt 56 weggedrückt und an die gegenüberliegende erste oder zweite Nutflanke 43a, 43b angedrückt wird. Auf diese Weise ergibt sich ein sehr intensiver Dichtkontakt zwischen der Dichtlippe 53 und der benachbarten Nutflanke 43a, 43b, wobei die Anpresskraft umso größer ist, je höher der Druck des zurückzuhaltenden Druckmediums ist. Das Druckmedium wird daher unabhängig von der Höhe seines Druckes wirksam daran gehindert, an der Stirnseite des Dichttellers 24 vorbei in den Bereich der Nutgrundfläche 43c zu strömen, sodass ein Aufblähen des Dichttellers 24 vermieden wird. Folglich wird die Formgebung des Dichttellers 24 durch die wirkenden Fluidkräfte nicht nennenswert beeinflusst, was der Lebensdauer des Dichttellers 24 zugute kommt.

Die Ausbildung des schlitzförmigen Zwischenraumes 57 wird dadurch begünstigt, dass der Basisabschnitt 56 in dem sich radial außen an den Fußabschnitt 54 anschließenden Bereich stirnseitig eine zu der Längsachse 24a konzentrische axiale Vertiefung 58 aufweist, deren radiale Abmessungen zweckmäßigerweise mindestens den radialen Abmessungen der zugeordneten Dichtlippe 53 entsprechen.

Die Vertiefung 58 ermöglicht der Dichtlippe 53 zweckmäßigerweise auch ein Eintauchen in die Außenkontur des Basisabschnittes 56, falls sich der Dichtteller 24 in der Ringnut 43 geringfügig axial bewegen sollte. Letzteres ist beim Ausführungsbeispiel möglich, weil der Basisabschnitt 56 eine geringfügig geringere Breite hat als die Ringnut 43. Vorzugsweise ist die Breite des Basisabschnittes aber nur etwa 1/100 mm bis 5/100 mm geringer als die Breite der Ringnut 43, also der Abstand zwischen den beiden sich gegenüberliegenden Nutflanken 43a, 43b. Auf diese Weise ist der Basisabschnitt 56 mit nur sehr kleinem axialem Spiel in der Ringnut 43 aufgenommen.

Wenn der Halteabschnitt 44 an beiden Stirnseiten 26, 27 eine Dichtlippe 53 aufweist, ist es vorteilhaft, wenn diese Dichtlippen 53 identisch ausgebildet sind.

Zweckmäßigerweise wird der Dichtteller 24 derart hergestellt, dass jede Dichtlippe 53 mit sich zu ihrem freien Endabschnitt 55 konisch erweiternder Gestalt axial vom Basisabschnitt 56 wegragt, solange der Dichtteller 24 noch nicht in die Ringnut 43 eingesetzt ist. Man erkennt dies gut aus der Schnittdarstellung der Figur 5. Die sich konisch erweiternde Formgebung behalten die Dichtlippen 53 auch nach der Montage des Dichttellers 24 bei, wenngleich der Konuswinkel nach der Montage in der Ringnut 43 erheblich größer ist als vor der Montage. Die Dichtlippe 53 hat also vor der Montage des Dichttellers 24 im Bereich des freien Endabschnittes 55 einen kleineren Durchmesser als nach der Montage, weil die Dichtlippe 53 beim Einsetzen in die Ringnut 43 nach radial außen hin umgebogen und zum freien Endabschnitt 55 hin aufgeweitet wird. Auf diese Weise ergibt sich auch im nicht fluiddruckbeaufschlagten Zustand der Dichtlippe 53 bereits eine Vorspannung bezüglich der zugeordneten Nutflanke 43a, 43b.

Bevorzugt sind die ringförmigen Ventilsitze 15, 16 Bestandteile jeweils eines bezüglich des Ventilgehäuses 3 gesonderten, im Querschnitt ringförmigen Ventilsitzkörpers 15a, 16a. Jeder Ventilsitzkörper 15a, 16a ist bezüglich des Ventilgehäuses 3 unbeweglich befestigt und weist einen der beiden ringförmigen Ventilsitze 15, 16 auf. Exemplarisch ist der den ersten ringförmigen Ventilsitz 15 aufweisende Ventilsitzkörper 15a ein im Presssitz in der Ventilkammer 2 befestigter Ringkörper. Hier bedarf es somit keiner zusätzlichen weichelastischen Dichtmittel zwischen dem Ventilsitzkörper 15a und dem Ventilgehäuse 3 zur gegenseitigen Abdichtung.

Der den zweiten ringförmigen Ventilsitz 16 aufweisende Ventilsitzkörper 16a ist zweckmäßigerweise Bestandteil einer Führungspatrone 59, die in die Ventilkammer 2 koaxial eingesetzt ist und in der das Ventilglied 4 mit seinem Hauptkörper 23 axial verschiebbar geführt ist. Hier ist es zweckmäßig, eine weichelastische Dichtungsanordnung 62 koaxial zwischen der Führungspatrone 48 und dem Ventilgehäuse 3 einzugliedern.

Wenigstens einer und bei Bedarf auch jeder der beiden ringförmigen Ventilsitze 15, 16 kann alternativ auch einstückig an dem Ventilgehäuse 3 ausgebildet sein.

## Patentansprüche

1. Mehrwegeventil, mit einem Ventilgehäuse (3), in dem eine Ventilkammer (2) ausgebildet ist, in der ein Ventilglied (4) unter Ausführung einer Schaltbewegung (5) axial bewegbar angeordnet ist, das über einen eine periphere Außenumfangsfläche (25) aufweisenden Hauptkörper (23) verfügt, der mindestens einen elastisch verformbaren, zwei einander entgegengesetzte axiale Stirnseiten (26, 27) aufweisenden ringförmigen Dichtteller (24) trägt, der mit einem radial innen angeordneten ringförmigen Halteabschnitt (44) in einer nach radial außen zu der peripheren Außenumfangsfläche (25) hin offenen Ringnut (43) des Hauptkörpers (23) gehalten ist und der einen bezüglich der Außenumfangsfläche (25) des Hauptkörpers (23) radial vorstehenden Verschlussabschnitt (45) aufweist, der an wenigstens einer der beiden axialen Stirnseiten (26, 27) eine Dichtfläche (46, 47) bildet, der ein bezüglich des Ventilgehäuses (3) ortsfester ringförmiger Ventilsitz (15, 16) axial gegenüberliegt, der eine zwei Ventilkammerabschnitte (17a, 17b; 17a, 17c) verbindende Überströmöffnung (18, 19) umrahmt und an dem der Dichtteller (24) mit der Dichtfläche (46, 47) unter Einnahme einer die Überströmöffnung (18, 19) absperrenden Schließstellung anliegen kann, **dadurch gekennzeichnet, dass** der Halteabschnitt (44) des Dichttellers (24) an wenigstens einer am Verschlussabschnitt (45) eine Dichtfläche (46, 47) aufweisenden axialen Stirnseite (26, 27) mit einer konzentrisch angeordneten, elastisch biegbaren ringförmigen Dichtlippe (53) versehen ist, die sich nach radial außen erstreckt und an der axial benachbarten Nutflanke (43a, 43b) der Ringnut (43) mit Dichtkontakt anliegt.

2. Mehrwegeventil nach Anspruch 1, **dadurch gekennzeichnet, dass** der auf der Seite des Dichttellers (24) liegende Ventilkammerabschnitt (17a) mit einem mit einem Verbraucher verbindbaren Arbeitskanal (22b) kommuniziert, während der auf der axial entgegengesetzten Seite liegende Ventilkammerabschnitt (17b) mit einem mit einer Druckquelle verbindbaren Speisekanal (22a) kommuniziert.

3. Mehrwegeventil nach Anspruch 1 oder 2, **dadurch gekennzeichnet, dass** der Dichtteller (24) axial beweglich zwischen zwei ihm jeweils axial zugewandten ringförmigen Ventilsitzen (15, 16) angeordnet ist, die jeweils eine Überströmöffnung (18, 19) umrahmen, die einen mittleren Ventilkammerabschnitt (17a) der Ventilkammer (2), in dem sich der Dichtteller (24) befindet, mit einem von zwei äußeren Ventilkammerabschnitten (17b, 17c) verbindet, wobei der Dichtteller (24) im Rahmen der Schaltbewegung (5) abwechselnd in jeweils einer von zwei Schließstellungen positionierbar ist, in der er unter Absperrung der zugeordneten Überströmöffnung (18, 19) an einem der ringförmigen Ventilsitze (15, 16) anliegt und gleichzeitig die jeweils andere Überströmöffnung (19, 18) freigibt.

4. Mehrwegeventil nach Anspruch 3, **dadurch gekennzeichnet, dass** der mittlere Ventilkammerabschnitt (17a) mit einem mit einem Verbraucher verbindbaren Arbeitskanal (22b) kommuniziert, während von den beiden äußeren Ventilkammerabschnitten (17b, 17c) der eine Ventilkammerabschnitt (17b) mit einem mit einer Druckquelle verbindbaren Speisekanal (22a) und der andere Ventilkammerabschnitt (17c) mit einem mit einer Drucksenke verbundenen Entlastungskanal (22c) kommuniziert.

5. Mehrwegeventil nach Anspruch 3 oder 4, **dadurch gekennzeichnet, dass** der Halteabschnitt (44) des Dichttellers (24) an beiden axialen Stirnseiten (26, 27) eine konzentrisch angeordnete, elastisch biegbare ringförmige Dichtlippe (53) aufweist, die sich nach radial außen erstreckt und an der axial benachbarten Nutflanke (43a, 43b) der Ringnut (43) mit Dichtkontakt anliegt.

6. Mehrwegeventil nach Anspruch 5, **dadurch gekennzeichnet, dass** der Dichtteller (24) konzentrisch zu einer Längsachse (24a) angeordnet ist, wobei jede Dichtlippe (53) ebenfalls konzentrisch zu dieser Längsachse (24a) ausgerichtet ist und sich zu ihrem freien Endabschnitt (55) hin konisch erweitert.

7. Mehrwegeventil nach Anspruch 5 oder 6, **dadurch gekennzeichnet, dass** jede Dichtlippe (53) ein einstückiger Bestandteil des Halteabschnittes (44) ist.

8. Mehrwegeventil nach einem der Ansprüche 1 bis 7, **dadurch gekennzeichnet, dass** der Dichtteller (24) einstückig ausgebildet ist und zweckmäßigerweise aus einem Elastomermaterial besteht.

9. Mehrwegeventil nach einem der Ansprüche 1 bis 8, **dadurch gekennzeichnet, dass** zumindest der die Ringnut (43) bildende Abschnitt des Hauptkörpers (23) des Ventilgliedes (4) einstückig ausgebildet ist.

10. Mehrwegeventil nach einem der Ansprüche 1 bis 9, **dadurch gekennzeichnet, dass** der Halteabschnitt (44) des Dichttellers (24) über einen einstückig mit dem Verschlussabschnitt (45) ausgebildeten Basisabschnitt (56) verfügt, an dem die mindestens eine Dichtlippe (53) seitlich in einer Weise einstückig angeformt ist, dass sie von dem Basisabschnitt (56) weg und zugleich nach radial außen ragt.

11. Mehrwegeventil nach Anspruch 10, **dadurch gekennzeichnet, dass** der Basisabschnitt (56) des Halteabschnittes (44) an der mit einer Dichtlippe (53) versehenen axialen Stirnseite (26, 27) eine sich konzentrisch um die Dichtlippe (53) herum erstreckende ringförmige Vertiefung (58) aufweist, in die die sich an der benachbarten Nutflanke (43a, 43b) abstützende Dichtlippe (53) zweckmäßigerweise hineinbiegbar ist.

12. Mehrwegeventil nach Anspruch 10 oder 11, **dadurch gekennzeichnet, dass** die Dichtlippe (53) einen Fußabschnitt (54) aufweist, mit dem sie einstückig mit dem Basisabschnitt (56) verbunden ist und ausgehend von dem sie sich bis hin zu einem freien Endabschnitt (55) erstreckt, wobei sie im Bereich des freien Endabschnittes (55) einen größeren Durchmesser hat als im Bereich des Fußabschnittes (54) und wobei zweckmäßigerweise ein ringförmiger schlitzförmiger Zwischenraum (57) axial zwischen dem Basisabschnitt (56) und jeder Dichtlippe (53) ausgebildet ist.

13. Mehrwegeventil nach einem der Ansprüche 10 bis 12, **dadurch gekennzeichnet, dass** die Breite des Basisabschnittes (56) etwas geringer ist als die Breite der Ringnut (43), wobei der Basisabschnitt (56) zweckmäßigerweise 1/100 mm bis 5/100 mm schmäler ist als die Ringnut (43).

14. Mehrwegeventil nach einem der Ansprüche 1 bis 13, **dadurch gekennzeichnet, dass** das Ventilglied (4) Bestandteil eines Hauptventils (8) des Mehrwegeventils (1) ist, dem eine Vorsteuerventileinrichtung (12) zur Betätigung des Ventilgliedes (4) mittels Fluidkraft zugeordnet ist.

## Claims

1. Multiway valve, with a valve casing (3) in which is formed a valve chamber (2), in which is mounted a valve member (4) axially movable to execute a switching movement (5) and having a main body (23) with a peripheral outer circumferential surface (25) which carries at least one elastically deformable sealing disc (24) with two opposite axial end faces (26, 27) and held by a radially inwards oriented annular retaining section (44) in an annular groove (43) of the main body (23) which is open radially outwards towards the peripheral outer circumferential surface (25) and which has a closing section (45), radially protruding from the outer circumferential surface (25) of the main body (23) and forming a sealing face (46, 47) on at least one of the two axial end faces (26, 27), to which lies axially opposite an annular valve seat (15, 16), immovable relative to the valve casing (3), which frames an overflow orifice (18, 19) connecting two valve chamber section (17a, 17b; 17a, 17c), and against which the sealing disc (24) can make contact with the sealing face (46, 47), while adopting a closed position shutting-off the overflow orifice (18, 19), **characterised in that** the retaining section (44) of the sealing disc (24) is provided on at least one axial end face (26, 27) having a sealing face (46, 47) on the closing section (45), with a concentrically arranged, elastically flexible, annular seal lip (53), which extends radially outwards and fits up against the axially adjacent groove side (43a, 43b) of the annular groove (43) with sealing contact.

2. Multiway valve according to claim 1, **characterised in that** the valve chamber section (17a) lying on the side of the sealing disc (24) communicates with an operating passage (22b) connectable to a load, while the valve chamber section (17b) lying on the axially opposite side communicates with a feed passage (22a) connectable to a pressure source.

3. Multiway valve according to claim 1 or 2, **characterised in that** the sealing disc (24) is arranged axially movable between two annular valve seats (15, 16), each facing it axially and each framing an overflow orifice (18, 19) which connects a central valve chamber section (17a) of the valve chamber (2), in which the sealing disc (24) is located, with one of two outer valve chamber sections (17b, 17c), wherein the sealing disc (24) may be positioned in the course of the switching movement (5) alternately in each case in one of two closed positions in which, while shutting-off the assigned overflow orifice (18, 19), it fits up against one of the annular valve seats (15, 16) and at the same time uncovers the other respective overflow orifice (19, 18).

4. Multiway valve according to claim 3, **characterised in that** the central valve chamber section (17a) communicates with an operating passage (22b) connectable to a load, while of the two outer valve chamber sections (17b, 17c) the one valve chamber section (17b) communicates with a feed passage (22a) connectable to a pressure source and the other valve chamber section (17c) communicates with a vent passage (22c) connected to a pressure sink.

5. Multiway valve according to claim 3 or 4, **characterised in that** the retaining section (44) of the sealing disc (24) has on both axial end faces (26, 27) a concentrically arranged, elastically flexible seal lip (53) which extends radially outwards and fits up against the axially adjacent groove side (43a, 43b) of the annular groove (43) with sealing contact.

6. Multiway valve according to claim 5, **characterised in that** the sealing disc (24) is arranged concentrically to a longitudinal axis (24a), wherein each seal lip (53) is likewise aligned concentrically to this longitudinal axis (24a) and expands conically towards its free end section (55).

7. Multiway valve according to claim 5 or 6, **characterised in that** each seal lip (53) is an integral part of the retaining section (44).

8. Multiway valve according to any of claims 1 to 7, **characterised in that** the sealing disc (24) is in one piece and expediently made of an elastomer material.

9. Multiway valve according to any of claims 1 to 8, **characterised in that** at least the section of the main body (23) of the valve member (4) forming the annular groove (43) is made in one piece.

10. Multiway valve according to any of claims 1 to 9, **characterised in that** the retaining section (44) of the sealing disc (24) has a base section (56) made in one piece with the closing section (45) and to which the at least one seal lip (53) is moulded in one piece in a manner such that it extends away from the base section (56) and at the same time radially outwards.

11. Multiway valve according to claim 10, **characterised in that** the base section (56) of the retaining section (44) has on the axial end face (26, 27) provided with a seal lip (53) an annular recess (58) extending concentrically around the seal lip (53), into which the seal lip (53) resting on the adjacent groove side (43a, 43b) may expediently be bent.

12. Multiway valve according to claim 10 or 11, **characterised in that** the seal lip (53) has a foot section (54) by which it is joined in one piece with the base section (56) and from which it extends up to a free end section (55), wherein it has in the area of the free end section (55) a greater diameter than in the area of the foot section (54), and wherein expediently an annular groove-like intermediate space (57) is formed between the base section (56) and each seal lip (53).

13. Multiway valve according to any of claims 10 to 12, **characterised in that** the width of the base section (56) is somewhat less than the width of the annular groove (43), wherein the base section (56) is expediently 1/100 mm to 5/100 mm narrower than the annular groove (43).

14. Multiway valve according to any of claims 1 to 13, **characterised in that** the valve member (4) is part of a main valve (8) of the multiway valve (1) to which is assigned a pilot valve device (12) to actuate the valve member (4) by means of fluid power.

## Revendications

1. Soupape à plusieurs voies, avec un carter de soupape (3), dans lequel une chambre de soupape (2) est réalisée, dans laquelle un organe de soupape (4) est disposé de manière à pouvoir être déplacé axialement en exécutant un déplacement de commutation (5), qui dispose d'un corps principal (23) présentant une surface de contour extérieur (25) périphérique, qui supporte au moins un disque étanche (24) de forme annulaire pouvant être déformé de manière élastique présentant deux côtés frontaux (26, 27) axiaux opposés l'un à l'autre, qui est maintenu, par une section de maintien (44) de forme annulaire disposée à l'intérieur radialement, dans une rainure annulaire (43), ouverte vers l'extérieur radialement en direction de la surface de contour extérieur (25) périphérique, du corps principal (23) et qui présente une section d'obturation (45) faisant saillie radialement par rapport à la surface de contour extérieur (25) du corps principal (23), qui forme, au niveau d'au moins un des deux côtés frontaux (26, 27) axiaux, une surface étanche (46, 47), à laquelle fait face axialement un siège de soupape (15, 16) de forme annulaire stationnaire par rapport au carter de soupape (3), qui encadre une ouverture de trop-plein (18, 19) reliant deux sections de chambre de soupape (17a, 17b ; 17a, 17c) et au niveau duquel le disque étanche (24) peut reposer par la surface étanche (46, 47) en adoptant une position de fermeture bloquant l'ouverture de trop-plein (18, 19), **caractérisée en ce que** la section de maintien (44) du disque étanche (24) est pourvue, au niveau d'au moins un côté frontal (26, 27) axial présentant au niveau de la section d'obturation (45) une surface étanche (46, 47), d'une lèvre étanche (53) de forme annulaire disposée de manière concentrique pouvant être pliée de manière élastique, qui s'étend vers l'extérieur radialement et repose avec un contact étanche au niveau du flanc de rainure (43a, 43b) axialement adjacent de la rainure annulaire (43).

2. Soupape à plusieurs voies selon la revendication 1, **caractérisée en ce que** la section de chambre de soupape (17a) située sur le côté du disque étanche (24) communique avec un canal de travail (22b) pouvant être relié à un consommateur, tandis que la section de chambre de soupape (17b) située sur le côté axialement opposé communique avec un canal d'alimentation (22a) pouvant être relié à une source de pression.

3. Soupape à plusieurs voies selon la revendication 1 ou 2, **caractérisée en ce que** le disque étanche (24) est disposé de manière mobile axialement entre deux sièges de soupape (15, 16) de forme annulaire tournés respectivement axialement vers lui, qui encadrent respectivement une ouverture de trop-plein (18, 19), qui relie une section de chambre de soupape (17a) centrale de la chambre de soupape (2), dans laquelle le disque étanche (24) se trouve, à une parmi deux sections de chambre de soupape (17b, 17c) extérieures, dans laquelle le disque étanche (24) peut être positionné, dans le cadre du déplacement de commutation (5), en alternance dans respectivement une de deux positions de fermeture, dans laquelle il repose au niveau d'un des sièges de soupape (15, 16) de forme annulaire en bloquant l'ouverture de trop-plein (18, 19) associée et dégage dans le même temps l'autre ouverture de trop-plein (19, 18) respectivement.

4. Soupape à plusieurs voies selon la revendication 3, **caractérisée en ce que** la section de chambre de soupape (17a) centrale communique avec un canal de travail (22b) pouvant être relié à un consommateur, tandis que parmi les deux sections de chambre de soupape (17b, 17c) extérieures, une section de chambre de soupape (17b) communique avec un canal d'alimentation (22a) pouvant être relié à une source de pression et l'autre section de chambre de soupape (17c) communique avec un canal de décharge (22c) relié à un puits de pression.

5. Soupape à plusieurs voies selon la revendication 3 ou 4, **caractérisée en ce que** la section de maintien (44) du disque étanche (24) présente, au niveau des deux côtés frontaux (26, 27) axiaux, une lèvre étanche (53) de forme annulaire disposée de manière concentrique, pouvant être pliée de manière élastique, qui s'étend vers l'extérieur radialement et repose avec un contact étanche au niveau du flanc de rainure (43a, 43b) axialement adjacent de la rainure annulaire (43).

6. Soupape à plusieurs voies selon la revendication 5, **caractérisée en ce que** le disque étanche (24) est disposé de manière concentrique par rapport à un axe longitudinal (24a), dans laquelle chaque lèvre étanche (53) est orientée également de manière concentrique par rapport audit axe longitudinal (24a) et s'élargit de manière conique en direction de sa section d'extrémité (55) libre.

7. Soupape à plusieurs voies selon la revendication 5 ou 6, **caractérisée en ce que** chaque lèvre étanche (53) est un élément constitutif d'un seul tenant de la section de maintien (44).

8. Soupape à plusieurs voies selon l'une quelconque des revendications 1 à 7, **caractérisée en ce que** le disque étanche (24) est réalisé d'un seul tenant et est constitué de manière appropriée d'un matériau élastomère.

9. Soupape à plusieurs voies selon l'une quelconque des revendications 1 à 8, **caractérisée en ce qu'**au moins la section, formant la rainure annulaire (43), du corps principal (23) de l'organe de soupape (4) est réalisée d'un seul tenant.

10. Soupape à plusieurs voies selon l'une quelconque des revendications 1 à 9, **caractérisée en ce que** la section de maintien (44) du disque étanche (24) dispose d'une section de base (56) réalisée d'un seul tenant avec la section d'obturation (45), au niveau de laquelle l'au moins une lèvre étanche (53) est formée de manière latérale d'une manière d'un seul tenant qu'elle dépasse de manière à s'éloigner de la section de base (56) et, dans le même temps, vers l'extérieur radialement.

11. Soupape à plusieurs voies selon la revendication 10, **caractérisée en ce que** la section de base (56) de la section de maintien (44) présente, au niveau du côté frontal (26, 27) axial pourvu d'une lèvre étanche (53), un renfoncement (58) de forme annulaire s'étendant de manière concentrique tout autour de la lèvre étanche (53), dans lequel la lèvre étanche (53) prenant appui au niveau du flanc de rainure (43a, 43b) adjacent peut être pliée à l'intérieur de manière appropriée.

12. Soupape à plusieurs voies selon la revendication 10 ou 11, **caractérisée en ce que** la lèvre étanche (53) présente une section de pied (54), par laquelle elle est reliée d'un seul tenant à la section de base (56) et en partant de laquelle elle s'étend jusqu'à une section d'extrémité (55) libre, dans laquelle elle a, dans la zone de la section d'extrémité (55) libre, un diamètre plus grand que dans la zone de la section de pied (54) et dans laquelle de manière appropriée un espace intermédiaire (57) de forme annulaire en forme d'entaille est réalisé axialement entre la section de base (56) et chaque lèvre étanche (53).

13. Soupape à plusieurs voies selon l'une quelconque des revendications 10 à 12, **caractérisée en ce que** la largeur de la section de base (56) est légèrement plus petite que la largeur de la rainure annulaire (43), dans laquelle la section de base (56) est de manière appropriée plus étroite de 1/100 mm à 5/100 mm que la rainure annulaire (43).

14. Soupape à plusieurs voies selon l'une quelconque des revendications 1 à 13, **caractérisée en ce que** l'organe de soupape (4) fait partie intégrante d'une soupape principale (8) de la soupape à plusieurs voies (1), à laquelle est associé un système de soupape pilote (12) servant à actionner l'organe de soupape (4) au moyen d'une force de fluide.
